# EUROPEAN PATENT SPECIFICATION

(11) **EP 3 961 659 B1**
(45) Date of publication and mention of the grant of the patent: **19.06.2024**
(21) Application number: 19957183.7
(22) Date of filing: 26.12.2019
(51) Int. Cl.: H01B 12/06

(54) **METHOD FOR MANUFACTURING A SUPERCONDUCTING COMPOSITE WIRE BASED ON NB3SN**
VERFAHREN ZUR HERSTELLUNG EINES SUPRALEITENDEN VERBUNDDRAHTES AUF DER BASIS VON NB3SN
PROCÉDÉ DE PRODUCTION DE FIL CONDUCTEUR COMPOSITE SUPRACONDUCTEUR À BASE DE NB3SN

(43) Date of publication of application: 02.03.2022
(73) Proprietor: Joint-Stock Company "TVEL", Moscow 115409 (RU)
(72) Inventor: ABDYUKHANOV, Ildar Mansurovich, Moscow, 129323 (RU); ALEKSEEV, Maxim Viktorovich, Mitischi, 141006 (RU); SILAEV, Alexandr Gennadevich, Moscow, 123098 (RU); PANTSYRNY, Viktor Ivanovich, Moscow, 123098 (RU); MAREEV, Konstantin Alekseevich, Moscow, 121059 (RU); KRYLOVA, Mariia Vladimirovna, Moscow, 117148 (RU); TSAPLEVA, Anastasiia Sergeevna, Schelkovo, 141100 (RU); LUKYANOV, Pavel Alexandrovich, Moscow, 129075 (RU); ZERNOV, Sergei Mihailovich, Moscow, 111398 (RU)
(74) Representative: Yalçiner Patent and Consulting Ltd.
(86) International application number: PCT/RU2019/001021
(87) International publication number: WO 2021/133192

(56) References cited:
- EP-A1- 2 099 080
- EP-B1- 3 175 463
- RU-C1- 2 640 813
- US-A1- 2017 271 572
- US-A1- 2018 212 136
- US-A1- 2018 212 136
- CHARLIE SANABRIA ET AL: "Controlling Cu-Sn mixing so as to enable higher critical current densities in RRPNbSn wires", SUPERCONDUCTOR SCIENCE AND TECHNOLOGY, IOP PUBLISHING, TECHNO HOUSE, BRISTOL, GB, vol. 31, no. 6, 25 April 2018 (2018-04-25) , page 64001, XP020327221, ISSN: 0953-2048, DOI: 10.1088/1361-6668/AAB8DD [retrieved on 2018-04-25]
- BRUZEK C E ET AL: "Effect of heat treatments on superconducting properties of Nb/sub 3/Sn strands developed at GEC ALSTHOM", IEEE TRANSACTIONS ON APPLIED SUPERCONDUCTIVITY, IEEE, USA, vol. 7, no. 2, 1 June 1997 (1997-06-01), pages 1041-1044, XP011500904, ISSN: 1051-8223, DOI: 10.1109/77.614697

## Description

### TECHNICAL FIELD

The invention relates to the field of electrical engineering and the creation of long composite wires based on superconducting compounds for use in the manufacture of electrical equipment.

### BACKGROUND

State-of-the-art development of high energy physics devices requires creation of superconductive materials with high current carrying capacity in magnetic fields up to 16 T. It is known that density of the critical current in a superconductor depends on density of grain boundaries and composition of the superconductive phase. The primary operation responsible for generation of a superconductive layer microstructure is diffuse heat treatment.

Superconductive composite Nb₃Sn-based wires are usually exposed to multiple heat treatments, which makes it possible to provide for formation of an equiaxial small grain superconductive layer, which also means high current carrying capacity of a superconductor as a whole.

There is a known method to manufacture a superconductive composite Nb₃Sn-based wire [Nb3Sn Phase Growth and Superconducting Properties During Heat Treatment, Emanuela Barzi and Sara Mattafirri, IEEE TRANSACTIONS ON APPLIED SUPERCONDUCTIVITY, VOL. 13, NO. 2, 2003], consisting in formation of a superconductive wire using the method of internal source of tin and heat treatment of the final sized wire according to the following pattern: 400 °C, 80 h (heating speed 150 °C/h) + (650-750) °C, (2-400) h. At the first stage of diffuse heat treatment, a bronze matrix is formed with high tin content, then at the second stage of heat treatment the tin from the bronze matrix diffuses to niobium filaments, and a superconductive Nb₃Sn layer is formed. At the same time, at the first stage, if the heating pattern, temperature definition at this stage, and time delay have not been chosen properly, the refractory niobium filaments may be dissolved in a Cu-Sn matrix. The dissolution process represents damage to a crystalline grid of hard metal and transition of its atoms into fluid metal. The motive force behind this process is the difference in the value of thermodynamic potentials of hard metal atoms in the crystalline grid and in fluid metal. Along with dissolution, such difference gradually wanes, and disappears after a certain period of time. [V. I. Nikitin "Physical and chemical phenomena of hard metals exposure to fluid ones", Atomizdat 1967, p. 441]. The process of superconductive compound formation at the second stage in this case goes through formation of intermediate intermetallides, and the layer structure is characterized by a large number of large Nb₃Sn grains. Their presence causes lower density of grain boundaries, which also means lower density of the critical current in the superconductive wire. In case of fast heating to the temperature of the first stage, the processes of tin dissolution in the copper matrix and formation of noil are accompanied by presence of a fluid phase inside the conductor and cause formation of an intermediate nausite phase. Therefore, a fault of the above method to manufacture a superconductor is diffuse heat treatment of a ready-size conductor with the first stage at temperature of 400 °C, and with speed of heating to the temperature of this stage at 150 °C/h, since this forms a high quantity of nausite phase, which is then transformed into a large grain superconductive Nb₃Sn layer.

There is a known method to produce a superconductive composite Nb₃Sn-based wire [US 7585377 B2, published in 2009; Cu diffusion in Nb3Sn internal tin superconductors during heat treatment, Ian Pong, Luc-Rene Oberli, Luca Buttura, Supercond. Sci.Technol. 26 (2013)], consisting in formation of a superconductive wire using the method of internal tin source and heat treatment of the final sized wire according to the following pattern: at the first stage heat treatment is carried out at temperature of 180-220 °C for 24-100 h, at the second stage heat treatment is carried out at temperature of 340-410 °C for 24-50 h, at the third stage heat treatment is carried out at temperature of 625-725 °C for 12-200 h.

Despite the fact that at the first stage of this heat treatment under quite low temperatures tin and copper shall produce bronze, and a conductor may have no tin within itself, at the second stage a triple Cu-Nb-Sn phase is formed, which further prevents tin diffusion to niobium filaments and complicates formation of the superconductive layer. Besides, the microstructure of the superconductive Nb₃Sn phase formed of a triple Cu-Nb-Sn phase is characterized by presence of large grains, which causes reduced density of grain boundaries and density of the critical current in the superconductor.

One of the closest to the proposed technical solution is the method to produce a superconductive Nb₃Sn-based wire [US 2018/0212136 A1, published in 2018] according to the method of internal source for a copper-coated Nb₃Sn composite wire containing Nb, Sn, Cu and doped with titanium and/or tantalum, by drawing to diameter between 2 and 0.2 mm and heat treatment in two stages: at the first stage the heat treatment is carried out at temperature of 350-380 °C for 24-400 h, and the second stage of heat treatment is carried out at temperature of 620-750 °C and duration between 24 and 400 h.

The other closest to the proposed technical solution is the process for manufacturing Nb₃Sn superconducting wire by internal Sn process and precursor for manufacturing the same disclosed by EP2099080A1. The process includes a multielement wire including a bundle of a plurality of single-element wires each including a Sn or Sn-based alloy core centrally disposed, and a Cu or Cu-based alloy matrix and a plurality of Nb or Nb-based alloy filaments surrounding the Sn or Sn-based alloy core; and a rod-like reinforcing member disposed in and/or around the bundle of the single-element wires.

Another solution is disclosed by the paper "Controlling Cu-Sn mixing so as to enable higher critical current densities in RRP^{®} Nb3Sn wires" (Charlie Sanabria et al 2018 Supercond. Sci. Technol. 31 064001). In this paper, the phase evolution during the Cu-Sn 'mixing' stages of the wire heat treatment that occur prior to Nb₃Sn formation has been studied, and identified the critical role that the Sn-Nb-Cu ternary phase (Nausite) can play.

According to the literature data, the nausite phase is formed at temperatures below 408 °C [A new understanding of the heat treatment of Nb-Sn superconducting wires, Ch. Sanabria, 2017], besides, as annealing duration increases at this stage, the layer thickness grows. Therefore, heat treatment of the wire at the temperature of the first stage below 400 °C causes formation of the nausite phase, which results in lower critical density of the superconductor current.

### DISCLOSURE OF THE INVENTION

The objective is to develop a method to produce a superconductive composite Nb₃Sn-based wire with high current carrying capacity for use in various magnetic systems with fields above 12 T. The developed method enables to define thermal conditions of a first treatment which solves the problem of forming of the nausite phase and enables to determine the resulting microstructure of Nb3Sn and consequently its superconducting properties.

The technical result is ensuring high current carrying capacity in the superconductive composite Nb₃Sn-based wire in magnetic fields with induction above 12 T produced in accordance with the developed method.

The technical result is achieved in the method to produce a superconductive Nb₃Sn-based wire including formation of the first titanium and/or tantalum doped multi-filament blank by placement of a diffusion barrier and a copper matrix in a copper jacket, and in the center of the matrix there is a tin-containing rod surrounded by niobium-contaning rods, each with a copper-containing cladding, its deformation to produce a composite rod of the required size, its cutting into measured parts, formation of the second multifilament blank made of produced measured parts by means of their assembly in a metal jacket, deformation of the second multifilament blank by its drawing to produce a wire with diameter between 2 and 0.2 mm with its subsequent heat treatment in stages, where the second stage of heat treatment is carried out at temperature of 620-750 °C and duration between 24 and 400 h, besides, at the first stage the heat treatment is carried out at temperature of 410-500 °C for 5-200 h.

In particular case the first multifilament blank is doped with titanium and/or tantalum and at least another element selected from: Zr, Hf, Al, Mg, Mn, Ga, In, Y, Ce, La, Nd, Te, Zn.

In particular case, when the second multifilament blank is formed in a metal jacket, some produced measured parts of a composite rod are replaced with copper-conducting rods.

In particular case when the second multifilament blank is formed, copper-containing rods are placed additionally into the metal jacket.

Heat treatment in stages, where heat treatment at the first stage is carried out at temperature of 410-500 °C for 5-200 h, makes it possible to avoid formation of a triple nausite phase and to obtain a superconductive Nb₃Sn layer, microstructure of which is characterized by equiaxial grains, which provides for high current-carrying capacity of the superconductor.

Alloying of the first multifilament blank with titanium and/or tantalum and at least another element, for example, yttrium Y, makes it possible not only to increase the upper critical field of the superconductive wire, which also means increasing its current carrying capacity in intense magnetic fields, but also to produce less nausite phase in the process of heat treatment. Besides, this promotes formation of more equiaxial grains of superconductive Nb₃Sn phase of smaller size, which results in increased density of grain boundaries and higher current carrying capacity of the superconductor as a whole.

The technology to produce a superconductive Nb₃Sn-based wire using the proposed method includes the following main stages:
1. Formation of the first multifilament blank.
2. Deformation of the first multifilament blank to the rod of the necessary size.
3. Cutting of the produced rod into measured parts.
4. Formation of the second multifilament blank.
5. Deformation of the second multifilament blank by drawing to the necessary size.
6. Heat treatment by annealing of the wire to form a superconductive compound.

The proposed invention is explained with drawings.

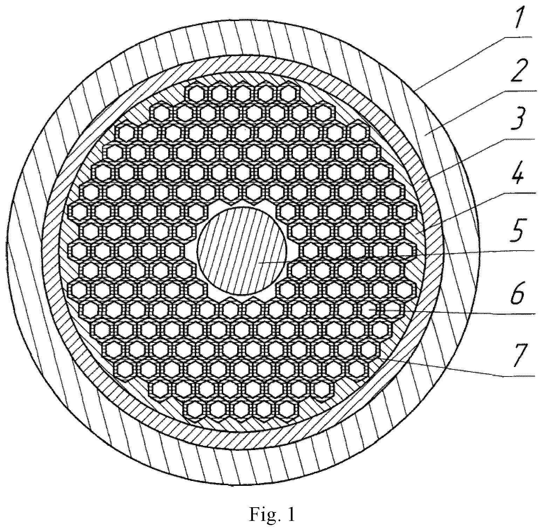

Fig. 1 presents the cross section of the first multi-filament blank 1. The blank 1 comprises a copper jacket 2, a diffusion barrier 3, inside of which there is a copper matrix 4, in the center of which there is a tin-containing rod 5, around which there are many niobium-containing rods 6 in a copper-containing cladding 7.

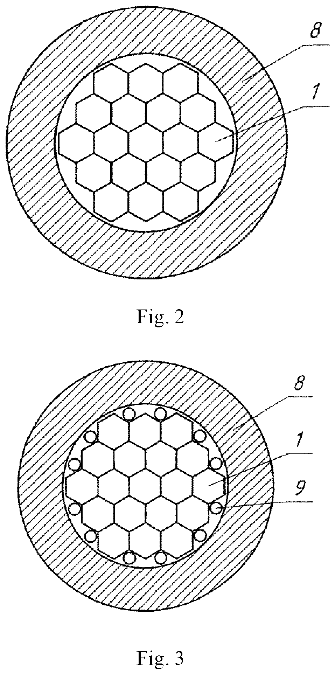

Fig. 2 presents the cross section of the second multi-filament blank made by placement of multiple blanks 1 in the metal jacket 8.
Fig. 3 presents the cross section of the second multi-filament blank made by placement of multiple blanks 1 and copper-containing rods 9 in the metal jacket 8.

### IMPLEMENTATION OF INVENTION

### Example.

Formation of the first multi-filament blank is carried out by placement of a niobium diffusion barrier with thickness of 5 mm, a tin rod with diameter of 19.5 mm, around which 948 titanium doped niobium rods are placed in a copper cladding sized "turnkey" as 2.5 mm in a copper matrix, being in the center of a copper jacket with height of 300 mm, outer diameter of 109 mm and an inner hole with diameter of 109 mm. Then the specified blank is deformed to "turnkey" size as 3.8 mm. The produced rod is cut into measured parts.

The second multi-filament blank to make a superconductive Nb₃Sn-based wire is formed by placement of 37 measured parts in a copper jacket.

The produced second multi-filament blank is deformed by drawing to diameter of 1 mm.

Annealing of the composite Nb₃Sn-based wire is carried out in the vacuum environment in stages: heating to 450 °C, delay of 100 h, then heating to 665 °C and delay at this temperature for 40 h, and then cooling together with the furnace.

### INDUSTRIAL APPLICABILITY

On a wire exposed to heat treatment in accordance with the specified pattern, the critical current density in the cross section without copper is more than 2500 A/mm² in the magnetic field with induction of 12 T at temperature of 4.2 K.

## Claims

1. A method for manufacturing a composite Nb₃Sn-based superconducting wire which including forming a first titanium- and/or tantalum-doped multi-filament blank (1) by placing a diffusion barrier (3) and a copper matrix (4) in a copper jacket (2), said copper matrix (4) having a tin-containing rod (5) at its centre and niobium-containing rods (6) arranged therearound, each of which has a copper-containing cladding (7), deforming said blank (1) until a composite rod of the desired size is formed, cutting same into measured parts, forming a second multi-filament blank from the resulting measured parts by assembling same in a metal jacket (8), deforming the second multi-filament blank by drawing same to form a wire having a diameter of from 2 to 0.2 mm, and subsequently heat treating said wire in stages, where the second stage of heat treatment is carried out at a temperature of 620-750°C for from 24 to 400 hours, **characterized in that** the first stage of heat treatment is carried out at a temperature of 410-500°C for 5-200 hours.

2. The method according to claim 1, wherein the first titanium- and/or tantalum-doped multi-filament blank (1) is further doped with at least one element selected from: Zr, Hf, Al, Mg, Mn, Ga, In, Y, Ce, La, Nd, Te, Zn.

3. The method according to claim 1, wherein a portion of the measured parts of the composite rod is replaced with copper-conducting rods (9) during forming of the second multi-filament blank in the metal jacket (8).

4. The method according to claim 1, wherein copper-containing rods (9) are further placed into the metal jacket (8) during forming of the second multi-filament blank.

## Patentansprüche

1. Das Herstellungsverfahren eines Nb₃Sn-Verbundstoff-Supraleiterdrahts, umfassend die Formung des ersten titan- und/oder tantaldotierten Multifilamentblocks (1) durch die Einlegung der Diffusionsbarriere (3) und Kupfermatrix (4) in eine Kupferhülle (2), in der Mitte der Kupfermatrix (4) ist eine zinnhaltige Stange (5) angebracht, um diese werden niobiumhaltige Stangen (6) angebracht, jede von denen eine kupferhaltige Hülle (7) hat, seine Umformung, bis eine Verbundstoffstange mit erforderlicher Größe entsteht, deren Längsteilung, die Formung des zweiten Multifilamentblocks aus gefertigten Messteilen durch deren Zusammensetzung in der Metallhülle (8), die Umformung des zweiten Multifilamentblocks durch dessen Ziehen bis der Fertigung des Drahts mit dem Durchmesser von 2 bis 0,2 mm mit dessen weiteren stufenweisen Wärmebehandlung, wo die zweite Stufe der Wärmebehandlung bei der Temperatur 620 - 750°C und mit einer Dauer von 24 bis 400 Stunden durchgeführt wird, **dadurch gekennzeichnet, dass** die Wärmebehandlung in der ersten Stufe bei der Temperatur 410 - 500°C innerhalb von 5 - 200 Stunden erfolgt.

2. Das Verfahren nach Anspruch 1, wobei der erste Multifilamentblock (1) mit Titan und/oder Tantal und mindestens mit noch einem Element, gewählt aus der Reihe Zr, Hf, Al, Mg, Mn, Ga, In, Y, Ce, La, Nd, Te, Zn, dotiert wird.

3. Das Verfahren nach Anspruch 1, wobei bei der Formung des zweiten Multifilamentblocks in der Metallhülle (8) ein Teil der gefertigten Messteile der Verbundstoffstange durch kupferhaltige Stangen (9) ersetzt wird.

4. Das Verfahren nach Anspruch 1, wobei bei der Formung des zweiten Multifilamentblocks kupferhaltige Stangen (9) in die Metallhülle (8) zusätzlich eingelegt werden.

## Revendications

1. Méthode de fabrication d'un fil compositionnel supraconducteur sur base de Nb₃Sn, qui inclut la formation du premier demi produit (1) multifibre allié au titane et/ou au tantale par la voie de placement d'une barrière à diffusion (3) et d'une matrice de cuivre (4) dans un revêtement de cuivre (2), et au centre de la matrice de cuivre (4) une barre stannifère (5) est placée et des tiges contenant du niobium (6) sont placées autour de cette dernière, dont chacune a un revêtement cuprifère (7), sa déformation jusqu'à l'obtention d'une barre compositionnelle de dimensions nécessaires, le découpage de cette dernière en parties mesurées, la formation du deuxième demi produit multifibre des parties mesurées obtenues par la voie de leur assemblage dans un revêtement métallique (8), la déformation du deuxième demi produit multifibre par la voie de filetage de ce dernier avec obtention d'un fil de diamètre de 2 à 0,2 mm avec son traitement thermique postérieur dans un régime échelonné où le deuxième pas de traitement thermique est réalisé à la température de 620 à 750°C durant la période de 24 à 400 heures, **caractérisée en ce que** pendant le premier pas on fait le traitement thermique à la température de 410 à 500°C au cours de 5 à 200 heures.

2. Méthode selon la revendication 1, dans lequel le premier demi produit multifibre (1) est allié au titan et/ou au tantale et, au moins, à encore un élément choisi parmi les éléments suivants : Zr, Hf, Al, Mg, Mn, Ga, In, Y, Ce, La, Nd, Te, Zn.

3. Méthode selon la revendication 1, dans lequel pendant la formation du deuxième demi produit multifibre dans le revêtement métallique (8) certaines parties mesurées obtenues de la barre compositionnelle sont remplacées par les tiges contenant du cuivre (9).

4. Méthode selon la revendication 1, dans lequel des tiges contenant du cuivre (9) sont en outre placées dans le revêtement métallique (8) pendant la formation de la seconde demi produit multifibre.
